# EUROPÄISCHE PATENTSCHRIFT

(11) **EP 4 058 750 B1**
(45) Veröffentlichungstag und Bekanntmachung des Hinweises auf die Patenterteilung: **25.10.2023**
(21) Anmeldenummer: 20808317.0
(22) Anmeldetag: 13.11.2020
(51) Int. Cl.: G01B 11/25

(54) **BOROSKOP MIT MUSTERPROJEKTION**
BORESCOPE WITH PATTERN PROJECTION
BOROSCOPE À PROJECTION DE MOTIF

(30) Priorität: 15.11.2019 DE 102019130950
(43) Veröffentlichungstag der Anmeldung: 21.09.2022
(73) Patentinhaber: Lufthansa Technik AG, 22335 Hamburg (DE)
(72) Erfinder: PETERS, Jan Oke, 22339 Hamburg (DE); THIES, Michael, 22395 Hamburg (DE); WEDOW, Sören, 35633 Lahnau (DE); BLÖCHER, Ronald, 35633 Lahnau (DE); NEUMANN, Oliver, 35606 Solms (DE); MOSTAFA, Tarek, 35641 Schöffengrund (DE); NEDDERMEYER, Werner, 6496 Echternach (LU); BAHR, Sönke, 64285 Darmstadt (DE); RASCHE, Sven, 20459 Hamburg (DE)
(74) Vertreter: Glawe, Delfs, Moll
(86) Internationale Anmeldenummer: PCT/EP2020/082059
(87) Internationale Veröffentlichungsnummer: WO 2021/094534

(56) Entgegenhaltungen:
- DE-T5-112014 000 509
- US-A1- 2010 220 293
- US-A1- 2013 286 407

## Beschreibung

Die Erfindung betrifft ein Boroskop, insbesondere für die Boroskopie von Flugzeugtriebwerken.

Im Stand der Technik ist es bekannt, zur Inspektion von technischen Geräten in Bereichen, die nicht unmittelbar einsehbar sind, auf Boroskope zurückzugreifen. Die Boroskope können durch kleine Öffnungen in die fraglichen Bereiche eingeführt werden und bieten entweder unmittelbar über eine Optik oder aber durch Anzeige eines durch geeignete Sensorik an der Boroskopspitze aufgenommenen Videobildes - auch Video-Boroskop genannt - Einblick in ansonsten nicht einsehbare Bereiche. Der Schaft des Boroskops kann dabei starr oder aber flexibel sein, um noch besser in schwer erreichbare Bereiche zu gelangen.

Es sind weiterhin Boroskope bekannt, bei denen an der Boroskopspitze zwei Bildsensoren angeordnet sind, deren Aufnahmebereich so überlappt, dass sich mithilfe von Triangulationsverfahren aus gleichzeitig aufgenommenen Bildern grundsätzlich 3-D-Informationen ableiten lassen, nämlich der Abstand der einzelnen Bildpunkte von der Boroskopspitze. Die mit einem entsprechenden Boroskop von verschiedenen Positionen gewonnenen 3-D-Informationen lassen sich zusammen mit den dazugehörigen Bildinformationen zu einem 3-D-Modell zusammenfügen, anhand dessen dann eine detaillierte Begutachtung des aufgenommenen Gegenstandes durchgeführt werden kann.

Insbesondere in den Fällen, in denen der von dem Boroskop zu erfassende Bereich kontrastarm ist, kann es bei der Ermittlung von 3-D-Informationen aus den aufgenommenen Bildern der beiden Bildsensoren durch Triangulation zu Fehlern kommen oder eine entsprechende Ermittlung ist gar nicht möglich. Um durch Triangulation 3-D-Information gewinnen zu können, ist es nämlich erforderlich, einzelne Objektpunkte auf gleichzeitig aufgenommenen Bildern der beiden Bildsensoren jeweils eindeutig identifizieren zu können, um aufgrund des Abstandes der Objektpunktabbilder auf den beiden Bildern bei Überlagerung den Abstand des Objektpunktes von den Bildsensoren abzuschätzen. Lassen sich einzelne Objektpunkte aufgrund eines fehlenden Kontrastes nicht identifizieren, können auch keine 3-D-Informationen ermittelt werden.

Im Stand der Technik ist es bekannt, ein Muster von Einzelpunkten auf die aufzunehmende Oberfläche zu projizieren, die dann als Anhaltspunkte für die Triangulation herangezogen werden. Zwischen den ermittelbaren 3-D-Informationen für die Einzelpunkte wird anschließend interpoliert. Die Auflösung der 3-D-Daten ist bei dieser bekannten Ausführung überschaubar und bspw. für die boroskopische Inspektion von Triebwerksschaufeln eines Flugzeugtriebwerks unzureichend.

Alternativ dazu ist es bekannt, die 3-D-Informationen per Streifenlichtscanning zu ermitteln, wobei es jedoch zwingend erforderlich ist, dass sich die relative Lage von Boroskop und aufzunehmendem Bereich sowie der aufzunehmende Bereich an sich während der Zeitdauer der Erfassung nicht verändert. Insbesondere bei größeren zu inspizierenden Geräten entsteht hieraus ein erheblicher Zeitaufwand.

Das Dokument DE 11 2014 000 509 T5 betrifft die Durchführung von stereoskopischen Messungen mittels eines Stereo-Boroskops. Dabei werden von zwei Messspitzen aufgenommene Bildinformationen unter Verwendung eines von einer Projektions-Messspitze auf das zu untersuchende Objekt projizierten Schattens überlagert.

In dem Dokument US 2010/0220293 A1 wird ein Projektor mit einem Lichtleiterbündel vorgeschlagen, bei dem zentral angeordnete Lichtleiter einen geringen Durchmesser aufweisen als peripher angeordnete Lichtleiter.

Das Dokument US 2013/0286407 A1 beschreibt ein Endoskop zur Durchführung von 3D-Oberflächenvermessungen mittels Triangulation, wobei Licht mithilfe eines Prismas farbzerlegt wird, und durch ein Bündel zufällig durchmischter Lichtleiter farbige Lichtpunkte auf ein Objekt projiziert werden, die wiederum mit einer Kamera aufgenommen werden können.

Aufgabe der vorliegenden Erfindung ist es, ein gegenüber dem Stand der Technik verbessertes Boroskop zu schaffen, welches eine zuverlässige und hochauflösende Ermittlung von 3-D-Informationen auch bei Aufnahme kontrastarmer Bereiche ermöglicht.

Gelöst wird diese Aufgabe durch ein Boroskop gemäß dem Hauptanspruch. Vorteilhafte Weiterbildungen sind Gegenstand der abhängigen Ansprüche.

Demnach betrifft die Erfindung ein Boroskop, insbesondere für die Boroskopie von Flugzeugtriebwerken, umfassend eine elektronische Bilderfassungseinheit mit zwei Bilderfassungssensoren als Boroskopobjektiv am Ende eines zur Einführung in eine Boroskopöffnung ausgebildeten Schafts, wobei die Position und Ausrichtung der Bilderfassungssensoren zueinander zur Ermittlung von 3-D-Informationen durch Triangulation geeignet sind, und wobei ein Musterprojektor zur Projektion eines Musters in den gemeinsamen Aufnahmebereich der Bilderfassungssensoren vorgesehen ist, der ein optisch abbildendes Lichtleiterbündel aus statistisch verteilten Lichtleitfasern mit unterschiedlichen Transmissionsgraden umfasst, mit dessen Eingangsfläche eine Lichtquelle gekoppelt und deren Ausgangsfläche auf den von den Bilderfassungssensoren erfassten Bereich ausgerichtet ist.

Durch den erfindungsgemäßen Musterprojektor wird auf eine vom Boroskop zu erfassende Oberfläche ein hochgradig unsymmetrisches kleinteiliges Muster auf die Oberfläche projiziert, wodurch der Kontrast auf der Oberfläche für die einzelnen Oberflächenpunkte erhöht wird, sodass die Ermittlung von 3-D-Information auf Basis der von den beiden Bilderfassungssensoren aufgenommenen Bildinformationen auch bei originär kontrastarmen Oberflächen verbessert oder gar erst möglich gemacht wird.

Das Muster wird erfindungsgemäß durch ein optisch abbildendes Lichtleiterbündel vergleichbar zu einer Faseroptik erzeugt, dessen einzelne Lichtleitfasern wenigstens teilweise unterschiedliche Transmissionsgrade aufweisen. Indem das Lichtleiterbündel grundsätzlich optisch abbildend ist, wozu die einzelnen Lichtleitfasern bekanntermaßen einen ausreichend geringen Durchmesser aufweisen müssen, wird sichergestellt, dass die vom Musterprojektor erzeugten einzelnen Musterpunkte eine ausreichend geringe Auflösung, häufig vergleichbare zur Auflösung der Bilderfassungssensoren aufweisen.

Das eigentliche projizierte Muster wird durch das Lichtleiterbündel dabei maßgeblich selbst erzeugt. Indem die einzelnen Lichtleitfasern unterschiedliche Transmissionsgrade aufweisen und diese statistisch in dem Lichtleiterbündel verteilt sind, ergibt sich bereits bei einem gleichmäßigen Lichteintrag an der Eingangsfläche durch die Lichtquelle eine zufällige Lichtintensitätsverteilung an der Ausgangsfläche, die auf der Oberfläche, auf die die Ausgangsfläche gerichtet ist, ein Kontrastmuster, welches die Ermittlung von 3-D-Informationen durch Triangulation bei kontrastarmen Oberflächen in der Genauigkeit verbessert oder bei kontrastlosen Oberflächen erst grundsätzlich ermöglicht. Dabei kommen die Geschwindigkeitsvorteile der Triangulation gegenüber dem Streifenlichtscanning uneingeschränkt zum Tragen.

Dabei ist es bereits ausreichend, Lichtleitfasern mit lediglich zwei unterschiedlichen Transmissionsgraden zu verwenden, da aufgrund der statistischen Verteilung sowie der sich auf der Anforderung der optischen Abbildung ergebenden geringen Durchmesser der Lichtleitfasern ein ausreichend detailreiches Muster projiziert werden kann. Ein Teil der Lichtleitfasern kann auch einen Transmissionsgrad von null aufweisen.

Die unterschiedlichen Transmissionsgrade der einzelnen Lichtleitfasern können durch geeignete Wahl unterschiedlicher Kern-Mantel-Verhältnisse (Cladding to Core Diameter Ratio; CCDR) der Lichtleitfasern erreicht werden. Durch das Kern-Mantel-Verhältnis, welches die innere Struktur einer Lichtleitfaser betrifft, kann der Transmissionsgrad einer Lichtleitfaser bei gleichbleibenden Außendurchmesser und bei Verwendung gleicher Materialien für Kern und Mantel verändert werden. Das Lichtleiterbündel kann einen Durchmesser von 0,5 mm bis 1,10 mm, vorzugsweise von 0,89 mm bis 0,90 mm aufweisen und/oder 6.500 bis 10.000, vorzugsweise 7.700 bis 7.900 Lichtleitfasern umfasst. Die einzelnen Lichtleitfasern können einen Durchmesser von 8 um bis 10 um aufweisen.

Aufgrund des geringen Durchmessers des Lichteiterbündels lässt sich der erfindungsgemäß vorgesehene Musterprojektor in der Regel neben die Bilderfassungssensoren problemlos in die Spitze eines Boroskops integrieren. Insbesondere muss der Außendurchmesser des Boroskops gegenüber bekannten Boroskopen nicht vergrößert werden. Der Musterprojektor ist dabei erfindungsgemäß zusammen mit den Bilderfassungssensoren in die Spitze eines Boroskops integriert, wobei Musterprojektor und Bilderfassungssensoren so zueinander ausgerichtet sind, dass 3-D-Informationen durch Triangulation anhand der durch die Bilderfassungssensoren aufgenommenen Musterprojektion ermittelt werden können.

Grundsätzlich ist es möglich, das Lichtleiterbündel durch den Schaft des Boroskops zu führen und eine extern angeordnete Lichtquelle mit der Eingangsfläche des Lichtleiterbündels zu verbinden. Es ist aber bevorzugt, wenn die Lichtquelle eine LED umfasst. Die Verwendung einer LED als Lichtquelle ermöglicht eine ausreichende Miniaturisierung des Musterprojektors, dass dieser vollständig, d. h. inkl. der Lichtquelle in der Spitze des Boroskops angeordnet sein kann. Es sind ausreichend lichtstarke LEDs mit geringer Wärmeentwicklung aus dem Stand der Technik bekannt, wobei die LEDs vorzugsweise besonders zum Einkoppeln von Licht in das Lichtleiterbündel ausgebildet und/oder hinsichtlich guter Lichteffizienz selektiert sind.

Ist die Wärmeentwicklung der Lichtquelle nicht ausreichend gering, kann die Lichtquelle von benachbarten Elektronikkomponenten thermisch entkoppelt werden.

Zwischen Lichtquelle und Eingangsfläche kann wenigstens ein optisches Element zur Strahlumlenkung, wie bspw. ein Prisma, vorgesehen sein. Durch ein entsprechendes optisches Element können die Ausgestaltung und die Abmessungen des Musterprojektors an die Gegebenheiten eines Boroskops angepasst werden.

Alternativ oder zusätzlich kann auch wenigstens ein optisches Element zur Strahlbeeinflussung, vorzugsweise eine Blende und/oder eine Linse, vorgesehen werden. Durch ein oder mehrere optische Elemente zur Strahlbeeinflussung können die Eigenschaften des projizierten Musters beeinflusst werden. Bspw. kann eine Kollimator-Optik vorgesehen werden, um das Licht der Lichtquelle vor Eintritt in das Lichtleiterbündel zu vergleichmäßigen. Eine solche Kollimator-Optik richtet das Licht der Lichtquelle vor Eintritt in das Lichtleitbündel möglichst homogen über die Gesamtfläche des Lichtleitbündels aus. Das projizierte Muster wird dann praktisch allein durch die unterschiedlichen Transmissionsgrade der einzelnen Lichtleitfasern erzeugt.

Die Lichtquelle ist zur Abgabe von Licht in einem von den Bilderfassungssensoren grundsätzlich erfassbaren Wellenlängenbereich ausgebildet. Die Lichtquelle kann insbesondere zur Abgabe von weißem Licht und/oder Infrarotlicht ausgebildet sein.

Die Aufnahmekegel der Bilderfassungssensoren sind vorzugsweise in einem vorgegebenen Blickwinkel gegenüber dem Schaft ausgerichtet. Beträgt dieser Blickwinkel 90°, können Bereiche seitlich der Bilderfassungseinheit erfasst werden. Durch eine andere Wahl des Blickwinkels abweichend von 90° können in Einschubrichtung des Boroskops davorliegende Bereiche (Winkelbereich 30°-90°) oder zurückliegende Bereiche (Winkelbereich 90°-150°) erfasst werden. Es ist aber auch möglich, mehrere zur Triangulation vorgesehene Paare von Bilderfassungssensoren an einem einzelnen Boroskop vorzusehen, die jeweils unterschiedliche Blickwinkel aufweisen. Insbesondere können zwei Paare von Bilderfassungssensoren vorgesehen sein, wobei die Aufnahmekegel beider Bilderfassungssensoren des einen Paares in einem anderen Blickwinkel gegenüber der Schaftachse ausgerichtet sind als die Aufnahmekegel beider Bilderfassungssensoren des anderen Paares. In diesem Fall können mehrere Musterprojektoren vorgesehen sein oder ein Musterprojektor ist derart ausgestaltet, dass er ein Muster in die jeweiligen Aufnahmebereiche der Bilderfassungssensorpaare projiziert.

Die Bilderfassungseinheit kann wenigstens einen Bilderfassungssensor zur Erfassung von Farbbildern umfassen. Dabei können die von diesem wenigstens einen Bilderfassungssensor erfassten Farbbilder, insbesondere bei aktiver Musterprojektion, unmittelbar zur Triangulation verwendet werden. Es ist aber auch möglich, dass ein auf Basis von durch ein Paar Bilderfassungssensoren aufgenommene Grauwertbilder ermittelte 3-D-Informatinen mit den Farbinformationen eines Farb-Bilderfassungssensor ergänzt werden, um so eingefärbte 3-D-Informationen bzw. ein farbiges 3-D-Modell zu erhalten. Der Rückgriff auf Grauwert-Bilderfassungssensoren zur Ermittlung von 3-D-Informationen kann aufgrund der bei identischer Sensorgröße höheren Auflösung gegenüber Farb-Bilderfassungssensoren vorteilhaft sein. Für die Erfassung des Farbbildes wird in diesem Fall vorzugsweise zeitweise die Musterprojektion unterbrochen, um die Farbinformationen nicht zu verfälschen. Es kann für diesen Fall eine gesonderte Alternativlichtquelle zur zeitweisen gleichmäßigen Ausleuchtung des Aufnahmebereichs des Farb-Bilderfassungssensors vorgesehen sein.

Bei den Bilderfassungssensoren handelt es sich vorzugsweise um CCD-Sensoren oder CMOS-Sensoren, vorzugsweise mit Global Shutter. Die Bilderfassungssensoren weisen vorzugsweise eine Auflösung von 400 x 400 Pixel bis 2400 x 2400 Pixel, eine Bildwiederholrate von bis zu 240 Aufnahmen pro Sekunde und/oder einen Bildfeldöffnungswinkel von 30° bis 120°, vorzugsweise 35° bis 65°, weiter vorzugsweise von 40°, 50° oder 60°, jeweils ± 5°, vorzugsweise jeweils ± 3° auf. Mit entsprechenden Bilderfassungssensoren ist insbesondere auch eine kontinuierliche Aufnahme von Bildinformationen möglich.

Der Schaft des Boroskops kann starr oder flexibel sein. Ist der Schaft flexibel, kann das Boroskop bspw. durch ein Führungsrohr geführt werden. Das Führungsrohr kann dabei Teil des Boroskops oder einer gesonderten Führungsvorrichtung sein. Über das Führungsrohr kann dann die grundsätzliche Position des Boroskops bzw. dessen Bilderfassungseinheit im Innern des zu boroskopierenden Bereichs festgelegt werden. Der Schaft kann auch mit Seilzügen versehen sein, die eine unmittelbare Steuerung des Schaftes ermöglichen. Es ist aber auch möglich, das Boroskop mit flexiblem Schaft lose durch einen aufzunehmenden Bereich zu führen und die gewünschten Aufnahmen insbesondere beim Herausziehen des Boroskops zu erstellen.

Die Erfindung wird anhand vorteilhafter Ausführungsformen unter Bezugnahme auf die beigefügten Zeichnungen beispielhaft beschrieben. Es zeigen:
- Figur 1:: eine schematische Darstellung der Boroskopspitze eines ersten Ausführungsbeispiels eines erfindungsgemäßen Boroskops;
- Figur 2:: eine schematische Darstellung der Boroskopspitze eines zweiten Ausführungsbeispiels eines erfindungsgemäßen Boroskops; und
- Figur 3:: eine schematische Darstellung des von einem erfindungsgemäßen Boroskops gemäß einem der Figuren 1 oder 2 projizierten Muster.

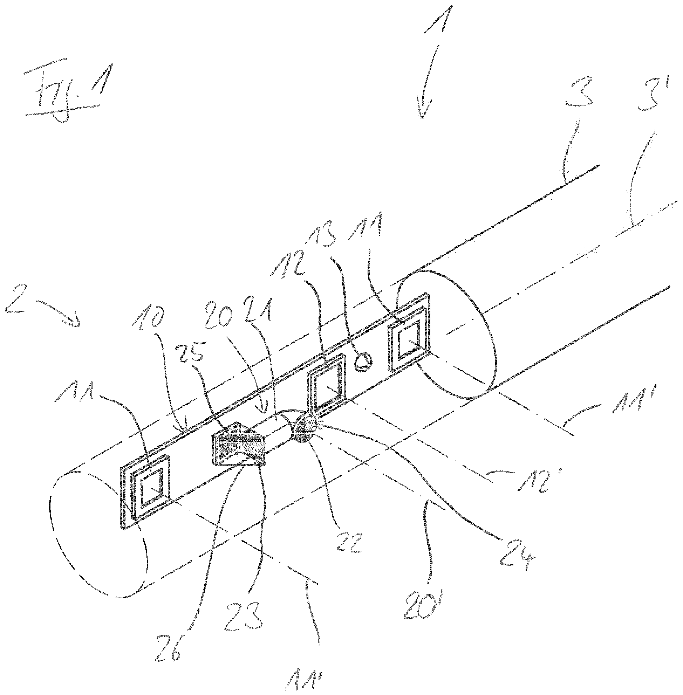

In Figur 1 ist schematisch die Spitze 2 eines Boroskops 1 gezeigt, die in die zu untersuchenden Bereiche eines technischen Geräts, wie bspw. ein Flugzeugtriebwerk, eingeführt werden kann. Das Boroskop 1 umfasst einen flexiblen, über Seilzüge steuerbaren Schaft 3, der in Figur 1 lediglich angedeutet ist. Die Symmetrieachse des Schafts 3 bildet die Schaftachse 3`.

An der Spitze 2 des Boroskops 1 ist eine elektronische Bilderfassungseinheit 10 am Schaft 3 vorgesehen, die im Verwendungszustand des Boroskops 1 von einem transparenten Schutzgehäuse 4 umgeben ist, welches in Figur 1 lediglich gestrichelt angedeutet ist.

Die Bilderfassungseinheit 10 umfasst zwei voneinander beabstandete Grauwert-Bilderfassungssensoren 11, deren Aufnahmekegel sich derart überschneiden, dass sich für den Überlappungsbereich durch Triangulation 3-D-Informationen aus den Bildern der beiden Bilderfassungssensoren 11 ableiten lassen. Darüber hinaus ist ein Farbbild-Bilderfassungssensor 12 vorgesehen, der ebenfalls den Überlappungsbereich der beiden anderen Bilderfassungssensoren 11 erfasst. Die Farbbild-Informationen des Bilderfassungssensors 12 können dazu genutzt werden, die über die beiden anderen Bilderfassungssensoren 11 gewonnenen 3-D-Informationen mit Farbinformationen anzureichern. Entsprechende Verfahren dafür sind im Stand der Technik bekannt.

Die Bilderfassungssensoren 11, 12 sind weiterhin so angeordnet, dass ihre Aufnahmekegel bzw. deren Aufnahmeachsen 11', 12' in einem vorgegebenen Blickwinkel von 90° gegenüber der Schaftachse 3' ausgerichtet sind.

Um die Erfassung eines Farbbildes durch den entsprechenden Bilderfassungssensor 12 zu ermöglichen, ist eine LED als Alternativlichtquelle 13 vorgesehen, mit dem der Aufnahmebereich des Bilderfassungssensors 23 für die Erfassung eines Farbbildes zeitweise ausreichend ausgeleuchtet werden kann.

Daneben umfasst die Bilderfassungseinheit 10 einen Musterprojektor 20, mit dem ein Muster in den gemeinsamen Aufnahmebereich der für die Triangulation vorgesehenen Bilderfassungssensoren 11 vorgesehen ist.

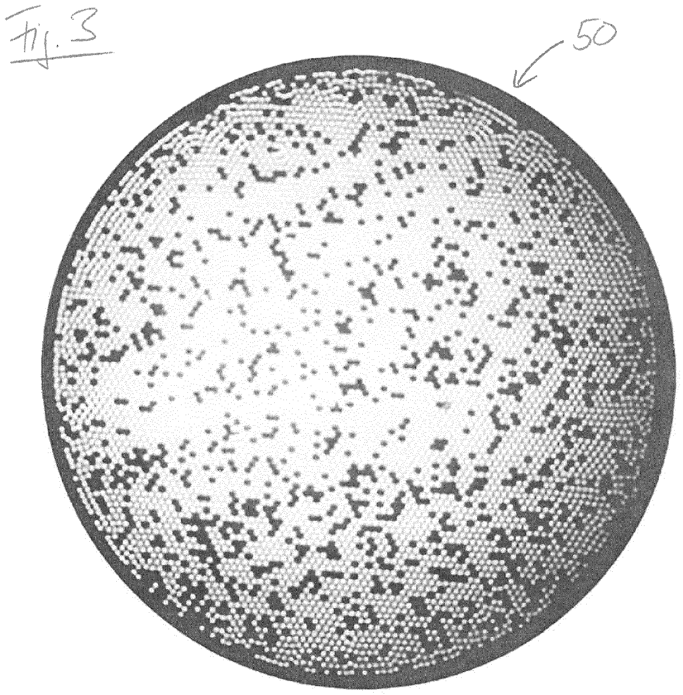

Der Musterprojektor 20 umfasst ein Lichtleiterbündel 21 mit ca. 7.800 Lichtleitfasern 22, die jeweils einen Durchmesser von ca. 9 um aufweisen. Aufgrund der Vielzahl von Lichtleitfasern 22 und deren Durchmesser gilt das Lichtleiterbündel 21 grundsätzlich optisch abbildend. Allerdings weisen die Lichtleitfasern 22 des Lichtleiterbündels 21 unterschiedliche Transmissionsgrade auf, wobei die Lichtleitfasern 22 entweder zu einer ersten Gruppe mit hohem Transmissionsgrad oder zu einer zweiten Gruppe mit deutlich geringerem Transmissionsgrad gehören. Da die entsprechenden Lichtleitfasern 22 statistisch verteilt sind, ergibt sich beim gleichmäßigen Einbringen von Licht in die Eingangsfläche 23 an der Ausgangsfläche 24 des Lichtleiterbündels 21 bzw. in der Projektion ein Muster 50, wie es in Figur 3 beispielhaft dargestellt ist. Die einzelnen Punkte des Musters 40 entsprechen dabei im Wesentlichen dem Auflösungsvermögen der Bilderfassungssensoren 11. Die Helligkeit der Punkte ist allein durch den Transmissionsgrad der jeweiligen Lichtleitfaser 22 bestimmt. Aufgrund der statistischen Verteilung der einzelnen Lichtleitfasern 22 mit unterschiedlichen Transmissionsgraden ist das projizierte Muster 50 hochgradig unsymmetrisch und kleinteilig.

Durch Projektion des Musters 50 auf eine zum Zweck der Triangulation von den Bilderfassungssensoren 11 zu erfassende Oberfläche wird ein zusätzlicher Kontrast aufgebracht, der einzelne Bildpunkte der erfassten Bilddaten bzw. Punkte des projizierten Musters in diesen Bilddaten eindeutig zuordenbar macht, womit die Ermittlung von 3-D-Informationen per Triangulation auch bei originär kontrastarmen Oberflächen möglich ist.

Für die letztendliche Projektion des Musters 22 ist eine oberflächenmontierte Weißlicht-Leuchtdiode als Lichtquelle 25 vorgesehen, deren Licht über ein Prisma als optisches Element zur Strahlungsumlenkung 26 in die Eingangsfläche 23 des Lichtleiterbündels 21 eingekoppelt wird. Die in Figur 1 gezeigte Anordnung von Lichtquelle 25, optischem Element zur Strahlungsumlenkung 26 und Lichtleiterbündel 21 ermöglicht eine geringe Bauhöhe gegenüber den übrigen Komponenten der Bilderfassungseinheit 10 bei gleichzeitiger Ausrichtung der Projektionsachse 20` parallel zu den Aufnahmeachsen 11', 12` der Bilderfassungssensoren 11, 12.

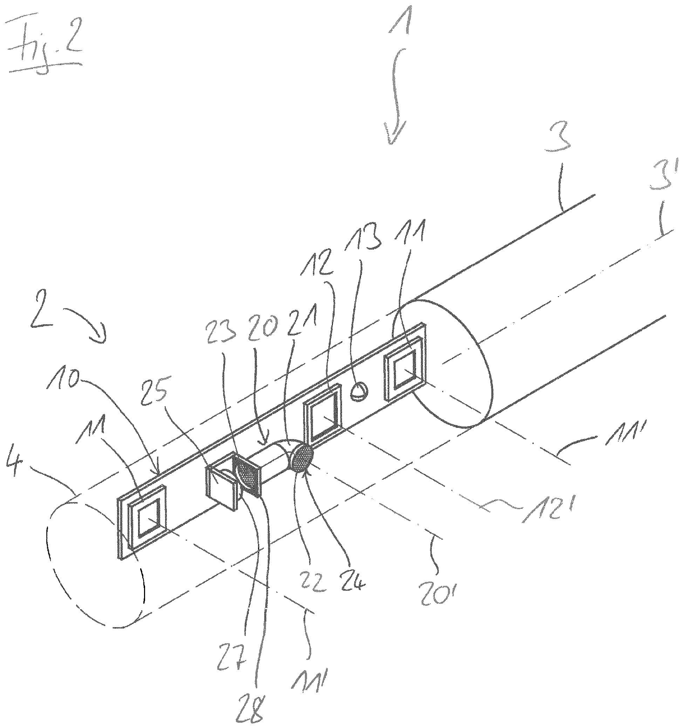

In Figur 2 ist ein alternatives Ausführungsbeispiel eines Boroskops 1 gezeigt, wobei in weiten Teilen Übereinstimmung mit dem Ausführungsbeispiel aus Figur 1 besteht. Im Folgenden wird daher nur auf die Unterschiede des alternativen Ausführungsbeispiels eingegangen und im Übrigen auf die vorstehenden Ausführungen verwiesen.

Die Unterschiede des Ausführungsbeispiels gemäß Figur 2 beschränken sich auf die Kopplung der Lichtquelle 25 mit der Eingangsfläche 23 des ansonsten identisch zu Figur 1 ausgebildeten Lichtleiterbündels 21.

Die Weißlicht-Leuchtdiode als Lichtquelle 25 ist unmittelbar auf die Eingangsfläche 23 des Lichtleiterbündels 21 gerichtet, wobei zwischen Lichtquelle 25 und Eingangsfläche 23 eine Kollimator-Linse 27 und eine Blende 28 vorgesehen ist. Durch diese Elemente zur Strahlbeeinflussung 27, 28 wird ein homogener Lichteintrag in das Lichtleiterbündel 21 über die gesamte Eingangsfläche 23 gewährleistet.

## Patentansprüche

1. Boroskop (1), insbesondere für die Boroskopie von Flugzeugtriebwerken, umfassend eine elektronische Bilderfassungseinheit (10) mit zwei Bilderfassungssensoren (11) als Boroskopobjektiv am Ende eines zur Einführung in eine Boroskopöffnung ausgebildeten Schafts (3), wobei die Position und Ausrichtung der Bilderfassungssensoren (11) zueinander zur Ermittlung von 3-D-Informationen durch Triangulation geeignet sind,
**dadurch gekennzeichnet, dass**
ein Musterprojektor (20) zur Projektion eines Musters (50) in den gemeinsamen Aufnahmebereich der Bilderfassungssensoren (11) vorgesehen ist, der ein grundsätzlich optisch abbildendes Lichtleiterbündel (21) aus statistisch verteilten Lichtleitfasern (22) mit unterschiedlichen Transmissionsgraden umfasst, mit dessen Eingangsfläche (23) eine Lichtquelle (25) gekoppelt und deren Ausgangsfläche (24) auf den von den Bilderfassungssensoren (11) erfassten Bereich ausgerichtet ist.

2. Boroskop nach Anspruch 1,
**dadurch gekennzeichnet, dass**
das Lichtleiterbündel (21) einen Durchmesser von 0,5 mm bis 1,10 mm, vorzugsweise von 0,89 mm bis 0,90 mm aufweist.

3. Boroskop nach einem der vorhergehenden Ansprüche,
**dadurch gekennzeichnet, dass**
das Lichtleiterbündel (21) 6.500 bis 10.000, vorzugsweise 7.700 bis 7.900 Lichtleitfasern (22) umfasst.

4. Boroskop nach einem der vorhergehenden Ansprüche,
**dadurch gekennzeichnet, dass**
eine einzelne Lichtleitfaser (22) einen Durchmesser von 8 um bis 10 µm aufweist.

5. Boroskop nach einem der vorhergehenden Ansprüche,
**dadurch gekennzeichnet, dass**
die Lichtquelle (25) wenigstens eine LED umfasst.

6. Boroskop nach einem der vorhergehenden Ansprüche,
**dadurch gekennzeichnet, dass**
zwischen Lichtquelle (25) und Eingangsfläche (23) wenigstens ein optisches Element zur Strahlumlenkung, vorzugsweise ein Prisma (26), und/oder zur Strahlbeeinflussung, vorzugsweise eine Blende (28) und/oder eine Linse (27), vorgesehen ist.

7. Boroskop nach einem der vorhergehenden Ansprüche,
**dadurch gekennzeichnet, dass**
die Lichtquelle (25) zur Abgabe von weißem Licht und/oder Infrarotlicht ausgebildet ist.

8. Boroskop nach einem der vorhergehenden Ansprüche,
**dadurch gekennzeichnet, dass**
die Aufnahmekegel der Bilderfassungssensoren (11) in einem vorgegebenen Blickwinkel gegenüber dem Schaft (3) ausgerichtet sind.

9. Boroskop nach einem der vorhergehenden Ansprüche,
**dadurch gekennzeichnet, dass**
die Bilderfassungseinheit (10) wenigstens einen Bilderfassungssensor (12) zur Erfassung von Farbbildern umfasst.

10. Boroskop nach einem der vorhergehenden Ansprüche,
**dadurch gekennzeichnet, dass**
der Schaft (3) als flexibler Schaft ausgestaltet ist.

## Claims

1. Borescope (1), in particular for borescoping aircraft engines, comprising an electronic image capture unit (10) having two image capture sensors (11) as a borescope lens at the end of a shaft (3) that is designed for being inserted into a borescope opening, wherein the position and alignment of the image capture sensors (11) in relation to one another are suitable for ascertaining 3D information using triangulation,
**characterized in that**
a pattern projector (20) for projecting a pattern (50) into the common recording region of the image capture sensors (11) is provided, which pattern projector comprises a fundamentally optically imaging light-guide bundle (21), which is made up of statistically distributed optical fibers (22) having differing transmittances, to whose input surface (23) a light source (25) is coupled and whose output surface (24) is aligned with the region captured by the image capture sensors (11).

2. Borescope according to Claim 1,
**characterized in that**
the light-guide bundle (21) has a diameter from 0.5 mm to 1.10 mm, preferably from 0.89 mm to 0.90 mm.

3. Borescope according to either of the preceding claims,
**characterized in that**
the light-guide bundle (21) comprises 6500 to 10,000, preferably 7700 to 7900, optical fibers (22).

4. Borescope according to any one of the preceding claims,
**characterized in that**
an individual optical fiber (22) has a diameter of 8 µm to 10 µm.

5. Borescope according to any one of the preceding claims,
**characterized in that**
the light source (25) comprises at least one LED.

6. Borescope according to any one of the preceding claims,
**characterized in that**
at least one optical element for beam deflection, preferably a prism (26), and/or for beam influencing, preferably a stop (28) and/or a lens element (27), is/are provided between the light source (25) and the input surface (23).

7. Borescope according to any one of the preceding claims,
**characterized in that**
the light source (25) is designed for outputting white light and/or infrared light.

8. Borescope according to any one of the preceding claims,
**characterized in that**
the recording cones of the image capture sensors (11) are aligned at a specified viewing angle with respect to the shaft (3).

9. Borescope according to any one of the preceding claims,
**characterized in that**
the image capture unit (10) comprises at least one image capture sensor (12) for capturing color images.

10. Borescope according to any one of the preceding claims,
**characterized in that**
the shaft (3) is designed as a flexible shaft.

## Revendications

1. Boroscope (1), notamment pour la boroscopie de moteurs d'aéronef, comprenant une unité électronique d'acquisition d'images (10) avec deux capteurs d'acquisition d'images (11) en tant qu'objectif de boroscopie à l'extrémité d'une tige (3) configurée pour être introduite dans une ouverture de boroscopie, la position et l'orientation des capteurs d'acquisition d'images (11) l'un par rapport à l'autre étant appropriées pour déterminer des informations en 3-D par triangulation,
**caractérisé en ce**
**qu'**un projecteur de motif (20) est prévu pour la projection d'un motif (50) dans la zone de réception commune des capteurs d'acquisition d'images (11), qui comprend un faisceau de guides de lumière (21) à imagerie fondamentalement optique, composé de fibres optiques (22) réparties de manière statistique avec différents degrés de transmission, à la surface d'entrée (23) duquel est couplée une source de lumière (25) et dont la surface de sortie (24) est orientée vers la zone détectée par les capteurs d'acquisition d'images (11).

2. Boroscope selon la revendication 1, **caractérisé en ce que** le faisceau de guides de lumière (21) présente un diamètre de 0,5 mm à 1,10 mm, de préférence de 0,89 mm à 0,90 mm.

3. Boroscope selon l'une quelconque des revendications précédentes, **caractérisé en ce que** le faisceau de guides de lumière (21) comprend de 6 500 à 10 000, de préférence de 7 700 à 7 900 fibres optiques (22).

4. Boroscope selon l'une quelconque des revendications précédentes, **caractérisé en ce qu'**une fibre optique individuelle (22) présente un diamètre de 8 µm à 10 µm.

5. Boroscope selon l'une quelconque des revendications précédentes, **caractérisé en ce que** la source de lumière (25) comprend au moins une DEL.

6. Boroscope selon l'une quelconque des revendications précédentes, **caractérisé en ce qu'**il est prévu entre la source de lumière (25) et la surface d'entrée (23) au moins un élément optique pour dévier le faisceau, de préférence un prisme (26), et/ou pour influencer le faisceau, de préférence un diaphragme (28) et/ou une lentille (27).

7. Boroscope selon l'une quelconque des revendications précédentes, **caractérisé en ce que** la source de lumière (25) est configurée pour émettre de la lumière blanche et/ou de la lumière infrarouge.

8. Boroscope selon l'une quelconque des revendications précédentes, **caractérisé en ce que** les cônes de réception des capteurs d'acquisition d'images (11) sont orientés selon un angle de vue prédéterminé par rapport à la tige (3) .

9. Boroscope selon l'une quelconque des revendications précédentes, **caractérisé en ce que** l'unité d'acquisition d'images (10) comprend au moins un capteur d'acquisition d'images (12) pour l'acquisition d'images en couleur.

10. Boroscope selon l'une quelconque des revendications précédentes, **caractérisé en ce que** la tige (3) est conçue sous forme de tige flexible.
